# EUROPEAN PATENT APPLICATION

(11) **EP 4 847 803 A1**
(43) Date of publication of application: **02.12.2026**
(21) Application number: 24919758.3
(22) Date of filing: 24.09.2024
(51) Int. Cl.: F16H 61/04, F16H 61/02

(54) **GEAR SHIFTING METHOD AND APPARATUS, AUTOMOBILE, STORAGE MEDIUM AND COMPUTER PROGRAM PRODUCT**

(30) Priority: 26.01.2024 CN 202410115950
(71) Applicant: Dongfeng Motor Group Co., Ltd, Wuhan, Hubei 430056 (CN)
(72) Inventor: WANG, Dewei, Wuhan, Hubei 430056 (CN); MENG, Bin, Wuhan, Hubei 430056 (CN); ZENG, Xin, Wuhan, Hubei 430056 (CN); ZHOU, Li, Wuhan, Hubei 430056 (CN); CAO, Dagu, Wuhan, Hubei 430056 (CN)
(74) Representative: Valet Patent Services Limited
(86) International application number: PCT/CN2024/120722
(87) International publication number: WO 2025/156678

(57) **Abstract**

Disclosed are a gear shifting method and apparatus, a vehicle, a storage medium, and a computer program product. The gear shifting method includes: during a gear shifting of the vehicle through the gear shifting assembly, acquiring a rotation parameter of a gear shifting drum in the gear shifting assembly; based on the rotation parameter of the gear shifting drum, determining a synchronization state of a synchronizer in the gear shifting assembly corresponding to the rotation parameter; and based on the synchronization state of the synchronizer, controlling a gear shifting electric motor to perform gear shifting.

## Description

### CROSS-REFERENCE TO RELATED APPLICATION

The present application is filed based on and claims priority to Chinese patent application No. 202410115950.2, filed on January 26, 2024. The entire contents of the aforementioned Chinese patent application are incorporated herein by reference in the present application.

### TECHNICAL FIELD

The present invention relates to the technical field of vehicles, and in particular, to a gear shifting method and apparatus, a vehicle, a storage medium, and a computer program product.

### BACKGROUND

In a transmission system of a vehicle, gear shifting is a critical operation involving cooperative operations of a plurality of assemblies, such as a gear shifting assembly, to ensure smoothness of the vehicle during driving. An existing gear shifting process is complex, and various parameters of components in the gear shifting assembly are required to be constantly adjusted throughout the entire gear shifting process. Control operations performed by the vehicle on the gear shifting assembly also are required to be constantly adjusted, and thus leading to low gear shifting efficiency of the vehicle.

### SUMMARY

In view of this, the present invention provides a gear shifting method and apparatus, a vehicle, a storage medium, and a computer program product, which are capable of simplifying a control process of gear shifting of the vehicle, and thus gear shifting efficiency of the vehicle is improved.

In a first aspect, an embodiment of the present invention provides a gear shifting method, including:
acquiring, during a gear shifting of a vehicle through a gear shifting assembly, a rotation parameter of a gear shifting drum in the gear shifting assembly;
determining, based on the rotation parameter of the gear shifting drum, a synchronization state of a synchronizer in the gear shifting assembly corresponding to the rotation parameter; and
controlling, based on the synchronization state of the synchronizer, a gear shifting electric motor to perform the gear shifting.
In a second aspect, an embodiment of the present invention provides a gear shifting apparatus including:
an acquisition module, configured for acquiring, during a gear shifting of a vehicle through a gear shifting assembly, a rotation parameter of a gear shifting drum in the gear shifting assembly;
a determination module, configured for determining, based on the rotation parameter of the gear shifting drum, a synchronization state of a synchronizer in the gear shifting assembly corresponding to the rotation parameter; and
a control module, configured for controlling, based on the synchronization state of the synchronizer, a gear shifting electric motor to perform the gear shifting.

In a third aspect, an embodiment of the present invention provides a vehicle including:
a processor; and
a memory for storing instructions executable by the processor,
where the processor is configured to execute the gear shifting method according to the first aspect.

In a fourth aspect, an embodiment of the present invention provides a non-transitory computer-readable storage medium, where a computer program or instructions in the storage medium, upon executed by a processor, implement(s) steps of the method according to the first aspect.

In a fifth aspect, an embodiment of the present invention provides a computer program product, where a computer program or instructions, upon executed by a processor, implement(s) steps of the method according to the first aspect.

In the embodiments of the present invention, during the gear shifting of the vehicle through the gear shifting assembly, the rotation parameter of the gear shifting drum in the gear shifting assembly is acquired, and the synchronization state of the synchronizer corresponding to the rotation parameter is determined based on the rotation parameter of the gear shifting drum. The rotation parameter of the gear shifting drum reflects an internal motion state of the gear shifting assembly. In this way, a timing during the gear shifting of the vehicle is capable of more quickly and accurately determined based on the synchronization state of the synchronizer corresponding to the rotation parameters, and thus a precision and smoothness of gear shifting of the vehicle is improved. Furthermore, the gear shifting electric motor is controlled to perform the gear shifting based on the synchronization state of the synchronizer, so that requirements for the vehicle to control the gear shifting electric motor based on various complex operations during the gear shifting are reduced, and thus a gear shifting efficiency of the vehicle is improved.

### BRIEF DESCRIPTION OF DRAWINGS

FIG. 1 is an exploded structural diagram of a synchronizer according to an exemplary embodiment.
FIG. 2 is a cross-sectional view of a synchronizer according to an exemplary embodiment.
FIG. 3 is a schematic flowchart of a gear shifting method according to an exemplary embodiment.
FIG. 4 is a schematic structural diagram of a gear shifting assembly according to an exemplary embodiment.
FIG. 5 is a schematic diagram of an axial displacement of a coupling sleeve according to an exemplary embodiment.
FIG. 6 is a comparison diagram of a gear shifting control process according to an exemplary embodiment.
FIG. 7 is a block diagram of a gear shifting apparatus according to an exemplary embodiment.
FIG. 8 is a schematic structural diagram of a vehicle according to an exemplary embodiment.

### DETAILED DESCRIPTION

To make objectives, technical solutions, and advantages of the embodiments of the present invention clearer, specific technical solutions of the present invention will be further described in detail below with reference to the accompanying drawings in the embodiments of the present invention. The following embodiments are intended to illustrate the present invention, but are not intended to limit the scope of the present invention.

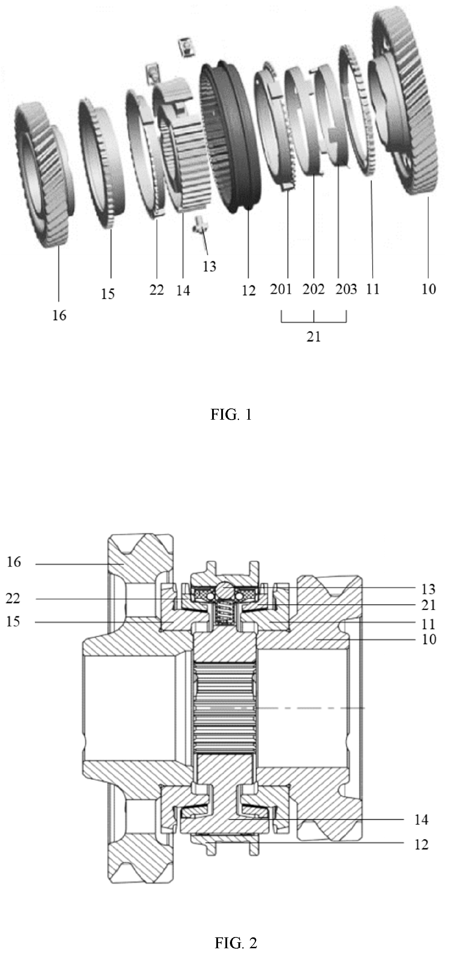

In the related art, FIG. 1 is an exploded structural diagram of a synchronizer according to an exemplary embodiment, and FIG. 2 is a cross-sectional view of a synchronizer according to an exemplary embodiment. As shown in FIG. 1 and FIG. 2, opposite ends of the synchronizer are provided with a first gear 10 and a second gear 16. Inner teeth of a coupling sleeve 12 mesh with outer teeth of a spline hub 14. The spline hub 14 is provided with three accommodating grooves along an axial direction on its circumferential periphery. Sliders 13 are installed in the accommodating grooves. A side of the slider 13 facing the coupling sleeve 12 is provided with a protrusion, and an inner side of the coupling sleeve 12 facing the slider 13 has three grooves which are fitted with the protrusions of the sliders 13. Therefore, the sliders 13 may move axially in the accommodating grooves through the coupling sleeve 13. A locking ring 21 is disposed between a side of the spline hub 14 and the first gear 10, and a locking ring 22 is disposed between another side of the spline hub 14 and the second gear 16. Herein, the locking ring 21 may further include an outer ring 201, an intermediate ring 202, and an inner ring 203, with the three rings nested with one another. The locking rings are also provided with three notches thereon corresponding to the sliders 13 for the sliders 13 to extend into. The first gear 10 is connected to a ring of engaging teeth 11, the second gear 16 is connected to a ring of engaging teeth 15, and an outer tooth ring of each gear is a conical surface, to make a friction conical surface of the locking ring and a friction conical surface of an outer tooth ring of the gear form a conical clutch that may be engaged and disengaged by sliding.

During a gear shifting of the vehicle, a rotation speed of the coupling sleeve is related to a vehicle speed. The vehicle actuates the coupling sleeve based on a gear shifting operation, so as to push the slider to abut against the notch of the locking ring, to make a friction force be generated between an inner conical surface of the locking ring and a conical surface of the outer tooth ring of the gear. Under an action of the friction force, a rotation speed of the gear tends to become consistent with a rotation speed of the locking ring. The coupling sleeve moves further towards the gear, to make the slider abut against a side surface of the notch of the locking ring, so that a force applied to the locking ring in a direction toward the gear no longer increases, and tooth-end chamfered surfaces of the coupling sleeve and tooth-end chamfered surfaces of the locking rings are abutted against each another. Therefore, the coupling sleeve, through a force applied by the tooth-end chamfered surfaces, presses the locking rings against the outer conical surfaces of the tooth rings, to make the conical clutches be engaged to further adjust the rotation speed of the gears. When the coupling sleeve and the locking rings reach the same rotation speed, teeth of the coupling sleeve mesh with teeth of the locking rings, and then the coupling sleeve meshes with the locking rings and the tooth rings of the engaging teeth without friction. The ear shifting of the vehicle is completed when the coupling sleeve meshes with the toothed ring.

However, in an existing method for controlling gear shifting of a vehicle based on a synchronizer, a vehicle control signal is detected and a control stage of the synchronizer is determined; a corresponding adjustment amount of a shift fork based on the control stage of the synchronizer is calculated; a moving speed and a force of a shift-fork rod are adjusted according to the adjustment amount of the shift fork; and the synchronizer is controlled to move according to the adjusted moving speed and the force by using the shift fork rod. The existing control method is required to detect each control stage of the synchronizer and calculate the moving speed and the force of the shift fork in real time based on each control stage to control the movement of the synchronizer. Accordingly, control operations of the vehicle during the gear shifting are complex, and thus the gear shifting efficiency of the vehicle is low.

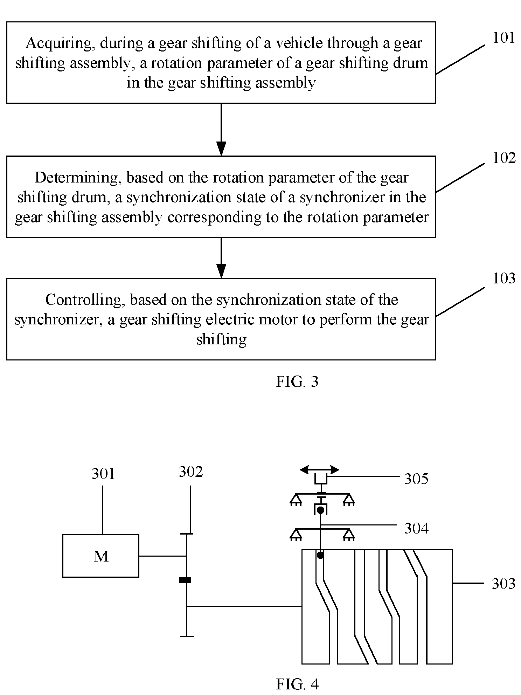

Based on this, a gear shifting method is provided according to an embodiment of the present invention, which is capable of improving gear shifting efficiency of a vehicle. FIG. 3 is a schematic flowchart of a gear shifting method according to an exemplary embodiment. As shown in FIG. 3, the gear shifting method includes:
step S101: acquiring, during a gear shifting of a vehicle through a gear shifting assembly, a rotation parameter of a gear shifting drum in the gear shifting assembly;
step S102: determining, based on the rotation parameter of the gear shifting drum, a synchronization state of a synchronizer in the gear shifting assembly corresponding to the rotation parameter; and
step S103: controlling, based on the synchronization state of the synchronizer, a gear shifting electric motor to perform gear shifting.

The gear shifting method shown in the embodiments of the present invention may be applied to a vehicle electronic control system of the vehicle. The vehicle e electronic control system acquires the rotation parameter of the gear shifting drum, determines the synchronization state of the synchronizer corresponding to the rotation parameter based on the rotation parameter, and sends a control instruction to the gear shifting electric motor based on the synchronization state of the synchronizer. The gear shifting electric motor, in response to the control instruction, performs a rotating operation to enable the vehicle to perform the gear shifting.

Optionally, the vehicle described above may include a conventional vehicle and a new energy vehicle. For example, the conventional vehicle may include a fuel-powered vehicle. The new energy vehicle may include a pure electric vehicle, a hybrid electric vehicle, or a fuel cell electric vehicle. This is not limited in the embodiments of the present invention.

It should be noted that, in terms of hardware structure, the vehicle electronic control system includes a sensor, an electronic control unit (ECU), and an actuator. When the vehicle is operating, operating condition information of the vehicle is continuously detected by the sensor and is transmitted to the ECU in real time through an input interface. The ECU, upon receiving the information, performs corresponding decision-making and processing according to a preprogrammed control program, and outputs a control signal to a corresponding actuator. The actuator, after receiving the control signal, performs a corresponding action to implement a predetermined function corresponding to the control signal.

In step S101, FIG. 4 is a schematic structural diagram of a gear shifting assembly according to an exemplary embodiment. As shown in FIG. 4, the vehicle performs the gear shifting through the gear shifting assembly. The gear shifting assembly may include a gear shifting electric motor 301, a reduction mechanism 302, a gear shifting drum 303, a shift fork 304, and a synchronizer 305.

Optionally, the gear shifting electric motor is configured to provide a driving force for the gear shifting assembly. The gear shifting electric motor, when rotating, is capable of driving the reduction mechanism to rotate. The reduction mechanism is connected to the gear shifting drum, and is configured to drive the gear shifting drum to rotate. A surface of the gear shifting drum is provided with a groove. When the gear shifting drum rotates, the shift fork slides within the groove. The shift fork is connected to the synchronizer, and is configured to drive the synchronizer to move axially on the gear shifting drum. The synchronizer is configured to implement meshing of gears with different transmission ratios for the gear shifting.

In the above process of the gear shifting of the vehicle through the gear shifting assembly, acquiring the rotation parameter of the gear shifting drum in the gear shifting assembly, may include direct acquisition or indirect acquisition, which is not limited in the embodiments of the present invention.

Exemplarily, in an embodiment, the rotation parameter of the gear shifting drum may be acquired by disposing a sensor on the gear shifting drum, and the vehicle electronic control system may directly acquire the rotation parameter transmitted by the sensor via the sensor of the gear shifting drum. In another embodiment, the rotation parameter of the gear shifting drum may also be acquired by acquiring a rotation parameter of the gear shifting electric motor. Since the gear shifting electric motor is connected to the gear shifting drum and is capable of driving the gear shifting drum to rotate, the rotation parameter of the gear shifting electric motor has a corresponding relationship with the rotation parameter of the gear shifting drum. The vehicle electronic control system may indirectly acquire the rotation parameter of the gear shifting drum by acquiring the rotation parameter of the gear shifting electric motor.

It should be noted that the rotation parameter of the gear shifting drum acquired by the vehicle includes parameters such as a rotation angle, a moment of inertia, or a rotational torque, which is not limited in the embodiments of the present invention.

In step S102, the determining, based on the rotation parameter of the gear shifting drum, the synchronization state of the synchronizer corresponding to the rotation parameter, includes: acquiring, based on a mapping relationship between the rotation parameter of the gear shifting drum and the synchronization state of the synchronizer, the synchronization state corresponding to the rotation parameter of the gear shifting drum.

In the embodiments of the present invention, the synchronization states of the synchronizer may include: a neutral state, a pre-synchronization state, or a locking state, or the like. Herein, the rotation parameter of the gear shifting drum corresponds to the synchronization state of the synchronizer, and the rotation parameter of the gear shifting drum may correspond to one or more synchronization states of the synchronizer.

Exemplarily, the synchronization states of the synchronizer may include the pre-synchronization state, and a first rotation parameter of the gear shifting drum corresponds to the pre-synchronization state of the synchronizer. The synchronization state of the synchronizer may also include a locking state and a lock-release state, and a second rotation parameter of the gear shifting drum corresponds to the locking state and the lock-release state of the synchronizer.

It should be noted that, since rotation of the gear shifting drum drives the shift fork to move, the shift fork is connected to the synchronizer, and movement of the shift fork drives the synchronizer to move, the rotation parameter of the gear shifting drum is related to a displacement length of the synchronizer. Exemplarily, a relationship between the rotation angle of the gear shifting drum and the displacement length of the synchronizer is shown in formula (1):
$L = \frac{θ}{{i}_{drum}} \times {r}_{drum} \times tan α$ (1)
where L represents a displacement length of the synchronizer during the gear shifting; θ represents a rotation angle of the gear shifting electric motor; *i_{drum}* represents a transmission ratio of the reduction mechanism; *r_{drum}* represents an acting radius of a slider; and α represents a groove helix angle of the gear shifting drum.

In the embodiments of the present invention, the displacement length of the synchronizer is capable of being acquired based on the rotation parameter of the gear shifting drum. The displacement length of the synchronizer reflects the synchronization state of the synchronizer. Consequently, the synchronization state corresponding to the rotation parameter of the gear shifting drum is capable of being acquired based on the rotation angle of the gear shifting drum.

In step S103, a control instruction is sent by the vehicle electronic control system to the gear shifting electric motor based on the synchronization state of the synchronizer, and the gear shifting electric motor rotates in response to the control instruction to implement gear shifting.

It should be noted that, the vehicle electronic control system calculates an optimal gear shifting timing based on a vehicle speed, a throttle position and feedback information of other sensors, and sends a corresponding control signal. The control signal is used for activating a corresponding circuit to control an operation of the gear shifting electric motor. Exemplarily, the circuit includes a switching circuit, a relay circuit, a power drive circuit, and the like. The circuit is used for converting a power supply voltage into a signal for operating the gear shifting electric motor, and to perform a switching operation by controlling a relay of the gear shifting electric motor.

Optionally, gear shifting of the vehicle is an operation process in which, during driving, a position of a shift lever is constantly changed to vary a vehicle speed based on road conditions or a driver's intention. The gear shifting includes an upshifting or downshifting. The upshifting refers to increasing the vehicle speed to shift the shift lever into a higher gear. The downshifting refers to reducing the vehicle speed to shift the shift lever into a lower gear.

It may be understood that, during the gear shifting of the vehicle through the gear shifting assembly, control on the gear shifting electric motor varies. Controlling the gear shifting electric motor to perform the gear shifting based on the synchronization state of the synchronizer is capable of improving a precision of the gear shifting timing, so that a kinetic energy loss of the vehicle is reduced, and thus an energy consumption of the vehicle is reduced.

In the embodiments of the present invention, during the gear shifting of the vehicle through the gear shifting assembly, the rotation parameter of the gear shifting drum in the gear shifting assembly is acquired, and the synchronization state of the synchronizer corresponding to the rotation parameter is determined based on the rotation parameter of the gear shifting drum. The rotation parameter of the gear shifting drum reflects an internal motion state of the gear shifting assembly. In this way, the vehicle is capable of more quickly and accurately determining a timing during the gear shifting based on the synchronization state of the synchronizer corresponding to the rotation parameter, and thus a precision and smoothness of gear shifting of the vehicle is improved. Furthermore, the gear shifting electric motor is controlled to perform the gear shifting based on the synchronization state of the synchronizer, so that a requirement for the vehicle to control the gear shifting electric motor based on various complex operations during the gear shifting is reduced, and thus a gear shifting efficiency of the vehicle is improved.

In some embodiments, the rotation parameter includes a rotation angle. The determining, based on the rotation parameter of the gear shifting drum, the synchronization state of the synchronizer in the gear shifting assembly corresponding to the rotation parameter, includes:
determining, in a case that a current rotation angle of the gear shifting drum is within a first preset angle range, that the synchronization state of the synchronizer is a first state, the first state including a pre-synchronization state;
determining, in a case that the current rotation angle of the gear shifting drum is within a second preset angle range, that the synchronization state of the synchronizer is a second state, the second state including a locking state and a lock-release state; and
determining, in a case that the current rotation angle of the gear shifting drum is within a third preset angle range, that the synchronization state of the synchronizer is a third state, the third state including a tooth-to-tooth state, a back-taper facing state, and a gear-shifting completion state.

In the embodiments of the present invention, the synchronization states of the synchronizer include a pre-synchronization state, the locking state, the lock-release state, the tooth-to-tooth state, the back-taper facing state, and the gear-shifting completion state.

It should be noted that, the synchronizer is in the pre-synchronization state when the coupling sleeve is about to come into contact with the locking ring. The synchronizer is in the locking state when tooth surfaces of the coupling sleeve and tooth surfaces of the locking ring abut against each another. The synchronizer is in the lock-release state when the coupling sleeve meshes with the locking ring and is not in contact with the gear. The synchronizer is in the tooth-to-tooth state when tooth tips of the coupling sleeve and tooth tips of the gear are facing each other. The synchronizer is in the back-taper facing state when a back taper angle of the coupling sleeve and a back taper angle of the gear are facing each other. The synchronizer is in the gear-shifting completion state when the teeth of the coupling sleeve and the tooth ring of the gear mesh with each another.

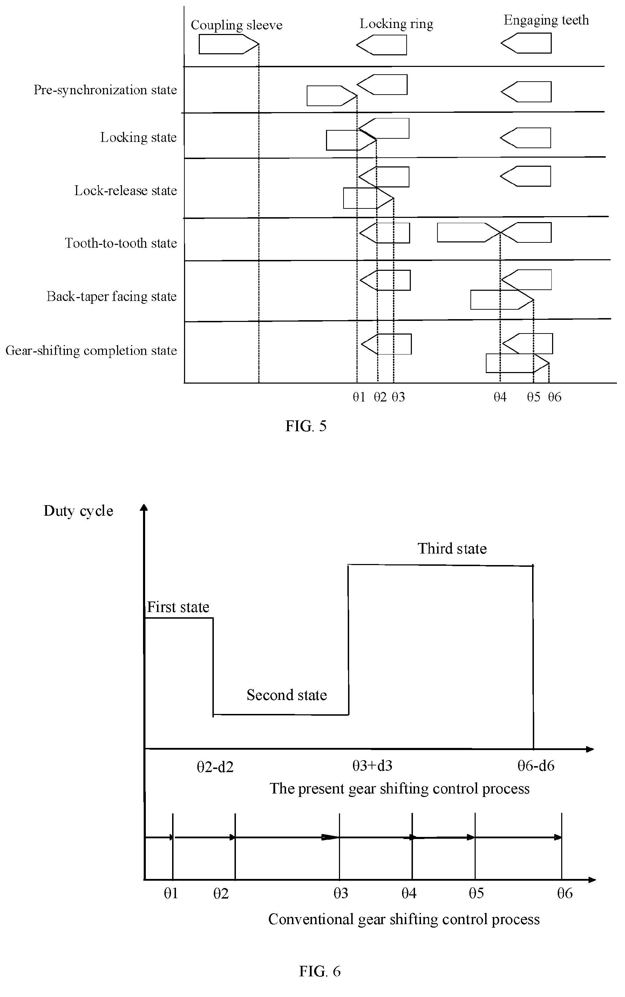

FIG. 5 is a schematic diagram of an axial displacement of a coupling sleeve according to an exemplary embodiment. As shown in FIG. 5, when the gear shifting drum rotates to drive the coupling sleeve of the synchronizer to move axially, a position of the coupling sleeve corresponds to the synchronization state of the synchronizer, and the position of the coupling sleeve also corresponds to the rotation angle of the gear shifting drum. Therefore, the synchronization state of the synchronizer is capable of being acquired based on the current rotation angle of the gear shifting drum.

Exemplarily, when the current rotation angle of the gear shifting drum is θ1, the coupling sleeve is displaced to a position where it is about to come into contact with the locking ring, that is, the synchronizer is in the pre-synchronization state at this time. When the current rotation angle of the gear shifting drum is θ2, the coupling sleeve is displaced to abut against the tooth surfaces of the locking ring, that is, the synchronizer is in the locking state.

Based on this, the rotation angle of the gear shifting drum is divided into intervals, and the divided angle intervals include a first preset angle range, a second preset angle range, and a third preset angle range.

Optionally, the first preset angle range corresponds to the pre-synchronization state of the synchronizer. The second preset angle range corresponds to the locking state and the lock-release state of the synchronizer. The third preset angle range corresponds to the tooth-to-tooth state, the back-taper facing state, and the gear-shifting completion state of the synchronizer.

It may be understood that, in the first state, the coupling sleeve of the synchronizer only needs to reach a target position. In the second state, meshing of teeth of the coupling sleeve of the synchronizer and the teeth of the locking ring will generate an interaction force, so that an interaction force between the coupling sleeve and the locking ring is required to be adjusted. In the third state, since the rotation speeds of the coupling sleeve, the locking ring, and the gear tend to be the same, only the position of the coupling sleeve is required to be controlled to allow the teeth of the coupling sleeve to mesh with the engaging teeth.

In the embodiments of the present invention, the first preset angle range, the second preset angle range, and the third preset angle range all have an interval critical value. It may be understood that, if a current rotation angle of the gear shifting drum is less than the interval critical value of the first preset angle range, the synchronizer is in the first state; if the current rotation angle of the gear shifting drum is greater than the interval critical value of the first preset angle range and is less than the interval critical value of the second preset angle range, the synchronizer is in the second state; and if the current rotation angle of the gear shifting drum is greater than the interval critical value of the second preset angle range and is less than the interval critical value of the third preset angle range, the synchronizer is in the third state.

Optionally, the interval critical value of the first preset angle range, the interval critical value of the second preset angle range, and the interval critical value of the third preset angle range may be set according to actual conditions, which is not limited in the embodiments of the present invention.

Exemplarily, in an embodiment, the interval critical value of the first preset angle range, the interval critical value of the second preset angle range, and the interval critical value of the third preset angle range may be determined by a preset rotation angle of the gear shifting drum. Herein, the preset rotation angle of the gear shifting drum may be determined according to a dimension chain of the gear shifting assembly, that is, the dimension chain of the gear shifting assembly is established based on a structure of the gear shifting assembly, and dimensions of components of the gear shifting assembly, such as dimensions of the synchronizer and the gear shifting drum, in the dimension chain of the gear shifting assembly are counted. Based on the dimension chain, the preset rotation angle of the gear shifting drum corresponding to the synchronization state of the synchronizer is acquired.

It should be noted that, a dimension chain refers to a closed dimension combination that is formed by connecting the dimensions of interrelated components during manufacturing of the components or assembling of whole machine in a certain order, which may include a length, angle, geometric tolerances, and the like.

In another embodiment, the interval critical value of the first preset angle range, the interval critical value of the second preset angle range, and the interval critical value of the third preset angle range are all determined by a preset rotation angle and an angle tolerance of the gear shifting drum.

It should be noted that, the preset rotation angle of the gear shifting drum may be acquired based on the dimension chain of the gear shifting assembly, and the angle tolerance of the gear shifting drum may be calculated by a large-number interchangeability method. A mapping table is formed based on the synchronization state of the synchronizer, the preset rotation angle and the angle tolerance of the gear shifting drum. Exemplarily, Mapping Table 1 is shown below:

**Mapping Table 1**

| No. | Step | Preset Rotation Angle | Angle Tolerance |
|---|---|---|---|
| 1 | Pre-synchronization | θ1 | ±d1 |
| 2 | Locking | θ2 | ±d2 |
| 3 | Lock-release | θ3 | ±d3 |
| 4 | Tooth-to-tooth | θ4 | ±d4 |
| 5 | Back-taper facing | θ5 | ±d5 |
| 6 | Gear shifting | θ6 | ±d6 |

Optionally, the interval critical value may be a difference or a sum of the preset rotation angle and the angle tolerance of the gear shifting drum, which is not limited in the embodiments of the present invention.

Exemplarily, the interval critical value of the first preset angle range may be the difference between the preset rotation angle and the angle tolerance of the gear shifting drum, the interval critical value of the second preset angle range may be the sum of the preset rotation angle and the angle tolerance of the gear shifting drum, and the interval critical value of the third preset angle range may be the difference between the preset rotation angle and the angle tolerance of the gear shifting drum.

It may be understood that, when the interval critical value of the first preset angle rang is the difference between the preset rotation angle and the angle tolerance of the gear shifting drum, the vehicle electronic control system may control the gear shifting electric motor to decelerate in advance before the synchronizer enters the locking state, so as to prevent tooth clash between the coupling sleeve of the synchronizer and the locking ring.

In the embodiments of the present invention, six synchronization states of the synchronizer are classified into three synchronization states, thereby a control process of the vehicle electronic control system is simplified, and thus a gear shifting efficiency of the vehicle is improved. Moreover, the synchronization state is determined based on the divided preset angle intervals through the current rotation angle of the gear shifting drum, so that the vehicle electronic control system enables to implement more precise gear shifting control, thereby being conducive to reducing a friction and impact during the gear shifting and thus driving smoothness of the vehicle is improved.

In some embodiments, the controlling, based on the synchronization state of the synchronizer in the gear shifting assembly, the gear shifting electric motor to perform the gear shifting, includes:
determining, based on the synchronization state of the synchronizer in the gear shifting assembly, a rotating operation performed by the gear shifting electric motor corresponding to the synchronization state of the synchronizer;
controlling, based on the rotating operation, the gear shifting electric motor to rotate; and
completing, based on a rotation of the gear shifting electric motor, the gear shifting.

In the embodiments of the present invention, the vehicle electronic control system may store rotating operations corresponding to a plurality of synchronization states of the synchronizer. The rotating operation performed by the gear shifting electric motor corresponding to the synchronization state of the synchronizer may be stored in the vehicle electronic control system through a mapping relationship between the synchronization state and the rotating operation.

Optionally, the process of acquiring the rotating operations corresponding to different synchronization states of the synchronizer may be performed by looking up, from the mapping relationship between the synchronization state and the rotating operation, the rotation operations corresponding to the different synchronization statuses. In this way, in the embodiments of the present invention, the rotation operations may be obtained by looking up the mapping relationship without the requirement for real-time calculation, so that the gear shifting efficiency of the vehicle is capable of being improved.

Exemplarily, a first state of the synchronizer corresponds to a first rotating operation; a second state of the synchronizer corresponds to a second rotating operation; and a third state of the synchronizer corresponds to a third rotating operation. Herein, different synchronization states may correspond to different rotating operations performed by the gear shifting electric motor, or may correspond to the same rotating operation performed by the gear shifting electric motor, which is not limited in the embodiments of the present invention.

In the embodiments of the present invention, the rotating operations may be rotating by a preset distance, rotating by a preset angle, or applying a preset torque, or the like, which is not limited in the embodiments of the present invention.

It should be noted that, the vehicle electronic system has closed-loop control modes for controlling the gear shifting electric motor, such as a current loop, a speed loop, and a position loop. When the gear shifting electric motor is controlled via the current loop for the rotating operation, a phase current of each phase of the gear shifting electric motor is controlled by adjusting an output predetermined current, and thus a torque of the gear shifting electric motor is controlled. When the gear shifting electric motor is controlled via the speed loop for the rotating operation, the speed loop and the current loop are involved to control a rotational speed and a position of the gear shifting electric motor. When the gear shifting electric motor is controlled via the position loop for the rotating operation, the vehicle electronic system simultaneously performs computations of the current loop, the speed loop and the position loop simultaneously; and at this time, the vehicle electronic system has the largest computational load, and the control over the rotating operation of the gear shifting electric motor is also the most precise.

In the embodiments of the present invention, the controlling the gear shifting electric motor to rotate based on the rotating operation may be implemented as follows: the vehicle electronic control system sends a control instruction including the rotating operation to the gear shifting electric motor and the gear shifting electric motor, in response to the control instruction including the rotating operation, executes the rotating operation to rotate.

In some embodiments, the controlling the gear shifting electric motor to rotate based on the rotating operation includes:
controlling, in a condition that the rotating operation is a rotating by a first preset distance, the gear shifting electric motor to rotate by the first preset distance;
controlling, in a condition that the rotating operation is a rotating with a constant torque, the gear shifting electric motor to rotate at the constant torque; and
controlling, in a condition that the rotating operation is a rotating by a second preset distance, the gear shifting electric motor to rotate by the second preset distance.

In the embodiments of the present invention, when the synchronizer is in the first state, clearances among various components (e.g., the spline hub, the coupling sleeve, and the locking ring) in the synchronizer need to be eliminated, and the gear shifting electric motor rotates at a preset speed to enable the synchronizer to pass through the first state. That is, when the synchronizer is in the first state, the gear shifting electric motor may be rotated based on the rotating operation of rotating by the first preset distance.

It should be noted that, when the synchronizer is in the second state, the gear shifting needs to be performed based on a gear shifting force. The gear shifting force needs to take into account both a friction lifespan of the synchronizer and a gear shifting time. If the gear shifting force is greater than a preset threshold, synchronization may not be completed, and teeth of the coupling sleeve of the synchronizer may pass through the locking ring and directly contact with a tooth ring of the engaging teeth, causing a tooth clashing. If the gear shifting force is less than the preset threshold, a synchronization time of the synchronizer may be prolonged, so that the gear shifting time is prolonged. Herein, the gear shifting force may be obtained based on a conversion of a torque of the gear shifting electric motor, that is, when the synchronizer is in the second state, the gear shifting electric motor may be rotated based on the rotating operation with a constant torque.

Exemplarily, a conversion process of the gear shifting force based on the torque of the gear shifting electric motor is shown in formula (2):
${F}_{shift} = \frac{{T}_{motor} {i}_{drum}}{{r}_{drum}} \times \left(\frac{1 - μtan α}{tanα + μ}{η}_{1}\right)$ (2)

Where *F_{shift}* represents the gear shifting force applied by the gear shifting drum on the shift fork; *Tₘₒₜₒᵣ* represents the torque of the gear shifting electric motor; µ represents a friction coefficient between the groove of the gear shifting drum and a slider; and η₁ represents an efficiency of the reduction mechanism.

Based on the above, the constant torque of the gear shifting electric motor is determined based on the gear shifting force, and the gear shifting electric motor is rotated based on the constant torque, that is, the vehicle electronic control system controls the gear shifting force of the gear shifting electric motor to enable the teeth of the coupling sleeve of the synchronizer to mesh with the tooth ring of the engaging teeth, thereby taking into account both the friction lifespan of the synchronizer and the gear shifting time, and thus the gear shifting efficiency is improved when the synchronizer is in the second state.

Similarly, when the synchronizer is in the third state, the synchronizer has completed synchronization, and enters a second free travel stage (i.e., the synchronizer is in a travel from the lock-release state to the tooth-to-tooth state). Herein, the second free travel stage corresponds to a first free travel stage (i.e., the synchronizer is in the pre-synchronization state ) in which the synchronizer is in the first state. Due to a shaft system drag torque, there is a rotational speed difference between the coupling sleeve and the engaging teeth. To ensure successful gear shifting, the gear shifting electric motor needs to be operated at a predetermined speed to allow the synchronizer to pass through the third state, thereby reducing the rotational speed difference between the coupling sleeve and the engaging teeth in the second free travel stage.

Moreover, when the synchronizer is between the tooth-to-tooth state and the gear-shifting completion state, the coupling sleeve needs to generate a tooth-pushing force and an inertia to push the engaging teeth to ensure successful gear shifting. Before the gear-shifting completion state, the gear shifting electric motor needs to decelerate to prevent a limiting surface of the coupling sleeve from impacting a limiting surface of the engaging teeth to generate gear shifting noise.

FIG. 6 is a comparison diagram of a gear shifting control process according to an exemplary embodiment. As shown in FIG. 6, in a plane coordinate system, an x-axis represents the rotation angle of the gear shifting drum, i.e., a state interval of the synchronizer; and a y-axis represents a duty cycle of the gear shifting electric motor, i.e., a percentage of a time during which a circuit of the gear shifting electric motor is energized to an entire working period of the circuit.

It may be understood that, in a conventional gear shifting process, it is necessary to detect six synchronization states of the synchronizer, and the gear shifting electric motor needs to be performed a rotational control in each synchronization state. In contrast, in the gear shifting control process of the present invention, only the first state, the second state and the third state of the synchronizer need to be detected, and the rotation control only needs to be performed on the gear shifting electric motor in these three synchronization states. In the embodiments of the present invention, allocation of circuit resources is more reasonable, and the control process is simpler. Rapid gear shifting is capable of being implemented while reducing gear shifting shock, and a gear shifting time of the vehicle may be controlled to be less than or equal to 0.5 seconds.

In the embodiments of the present invention, based on the rotating operation corresponding to the synchronization state of the synchronizer, the vehicle electronic control system achieves precise control of the gear shifting electric motor, so that smooth transition of gears during the gear shifting is ensured, thereby improving real-time responsiveness of the vehicle electronic control system, and thus enables the vehicle electronic control system to be more flexible and adaptable to different gear shifting situations.

In some embodiments, the acquiring the rotation parameter of the gear shifting drum in the gear shifting assembly includes:
determining, based on a position sensor of the gear shifting electric motor, a rotation angle of the gear shifting electric motor; and
determining, based on the rotation angle of the gear shifting electric motor and a transmission ratio between the gear shifting electric motor and the gear shifting drum, the rotation angle of the gear shifting drum.

In the embodiments of the present invention, the vehicle electronic control system is capable of monitoring and acquiring the rotation angle of the gear shifting electric motor in real time through the position sensor installed on the gear shifting electric motor.

Optionally, the position sensor may include a contact sensor or a proximity sensor, etc., which is not limited in the embodiments of the present invention.

Furthermore, since the rotation of the gear shifting electric motor drives the gear shifting drum to rotate, and the transmission ratio between the gear shifting electric motor and the gear shifting drum is a ratio of a rotational speed or angular velocity of the gear shifting electric motor to a rotational speed or angular velocity of the gear shifting drum, the rotational speed or angular velocity of the gear shifting electric motor is acquired based on the current rotation angle of the gear shifting electric motor, the rotational speed or angular velocity of the gear shifting drum is determined based on the rotational speed of the gear shifting electric motor, and the rotation angle of the gear shifting drum is capable of being determined based on the rotational speed or angular velocity of the gear shifting drum.

It should be noted that the vehicle electronic control system acquires the rotation parameter of the gear shifting drum in the gear shifting assembly for determining the synchronization state of the synchronizer in the gear shifting assembly, and the vehicle electronic control system is capable of controlling, based on the synchronization state of the synchronizer, the gear shifting electric motor to perform the gear shifting.

In the embodiments of the present invention, the position sensor provides the real-time rotation angle of the gear shifting electric motor, enabling the vehicle electronic control system to quickly respond to changing driving conditions. The rotation angle of the gear shifting drum is determined through the transmission ratio, so that designs of different vehicle models and gear shifting assemblies may be adapted, and thus flexibility of vehicle design is improved.

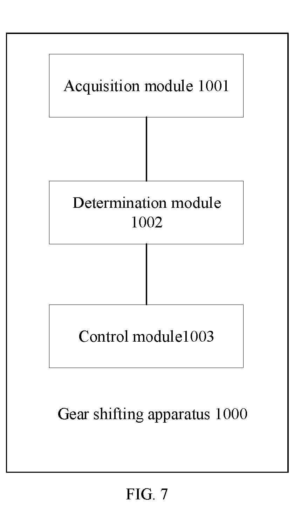

An embodiment of the present invention further provides a gear shifting apparatus. FIG. 7 is a block diagram of a gear shifting apparatus according to an exemplary embodiment. As shown in FIG. 7, the gear shifting apparatus 1000 includes:
an acquisition module 1001, configured for acquiring, during a gear shifting of a vehicle through a gear shifting assembly, rotation parameter of a gear shifting drum in the gear shifting assembly;
a determination module 1002, configured for determining, based on the rotation parameter of the gear shifting drum, a synchronization state of a synchronizer in the gear shifting assembly corresponding to the rotation parameter; and
a control module 1003, configured for controlling, based on the synchronization state of the synchronizer, a gear shifting electric motor to perform the gear shifting.

In some embodiments, the rotation parameter includes a rotation angle; and the determination module is further configured for: determining, in a case that a current rotation angle of the gear shifting drum is within a first preset angle range, that the synchronization state of the synchronizer is a first state, the first state including a pre-synchronization state; determining, in a case that the current rotation angle of the gear shifting drum is within a second preset angle range, that the synchronization state of the synchronizer is a second state, the second state including a locking state and a lock-release state; and determining, in a case that the current rotation angle of the gear shifting drum is within a third preset angle range, that the synchronization state of the synchronizer is a third state, the third state including a tooth-to-tooth state, a back-taper facing state, and a gear-shifting completion state.

In some embodiments, an interval critical value of the first preset angle range, an interval critical value of the second preset angle range, and an interval critical value of the third preset angle range are all determined by a preset rotation angle and an angle tolerance of the gear shifting drum.

In some embodiments, the control module is further configured for: determining, based on the synchronization state of the synchronizer in the gear shifting assembly, a rotating operation performed by the gear shifting electric motor corresponding to the synchronization state of the synchronizer; controlling, based on the rotating operation, the gear shifting electric motor to rotate; and completing, based on a rotation of the gear shifting electric motor, the gear shifting.

In some embodiments, the control module is further configured for: determining, based on the synchronization state of the synchronizer and a preset mapping relationship between the synchronization state and the rotating operation, the rotating operation performed by the gear shifting electric motor corresponding to the synchronization state of the synchronizer.

In some embodiments, the control module is configured for: controlling, in a condition that the rotating operation is a rotating by a first preset distance, the gear shifting electric motor to rotate by the first preset distance; controlling, in a condition that the rotating operation is a rotating operation at a constant torque, the gear shifting electric motor to rotate at the constant torque; and controlling, in a condition that the rotating operation is a rotating operation for rotating a second preset distance, the gear shifting electric motor to rotate by the second preset distance.

In some embodiments, the acquisition module is further configured for: determining, based on a position sensor of the gear shifting electric motor, a rotation angle of the gear shifting electric motor; and determining, based on the rotation angle of the gear shifting electric motor and a transmission ratio between the gear shifting electric motor and the gear shifting drum, the rotation angle of the gear shifting drum.

FIG. 8 is a schematic structural diagram of a vehicle according to an exemplary embodiment. Referring to FIG. 8, a vehicle 400 provided by an embodiment of the present invention may include: a processor 401, a communication interface 402, and a memory 403.

Optionally, the processor 401 generally controls an overall operation of a router.

The communication interface 402 may enable the electronic device to communicate with other terminals or servers through a network.

The memory 403 is configured to store instructions and applications executable by the processor 401, and may also cache data to be processed or already processed by the processor 401 and various modules in the router. The memory 403 may be implemented by a flash memory (FLASH) or a random access memory (RAM).

A storage medium, where when instructions in the storage medium are executed by a processor of a vehicle, the vehicle is enabled to execute a gear shifting method. The gear shifting method includes: during a process of a vehicle performing gear shifting through a gear shifting assembly, acquiring rotation parameter of a gear shifting drum in the gear shifting assembly; based on the rotation parameter of the gear shifting drum, determining a synchronization state of a synchronizer in the gear shifting assembly corresponding to the rotation parameter; and based on the synchronization state of the synchronizer, controlling a gear shifting electric motor to perform gear shifting.

Those skilled in the art should understand that the embodiments of the present invention may be provided as a method, a system, or a computer program product. Therefore, the present invention may take a form of an entirely hardware embodiment, an entirely software embodiment, or an embodiment combining software and hardware aspects. Moreover, the present invention may take a form of a computer program product implemented on one or more computer-usable storage media (including but not limited to a magnetic disk memory, a CD-ROM, an optical memory, etc.) containing computer-usable program codes.

The present invention is described with reference to flowcharts and/or block diagrams of a method, a device (system), and a computer program product according to embodiments of the present invention. It will be understood that each process and/or block in the flowcharts and/or block diagrams, and combinations of the processes and/or blocks in the flowcharts and/or block diagrams, may be implemented by computer program instructions. These computer program instructions may be provided to a processor of a general-purpose computer, special-purpose computer, embedded processor, or other programmable data processing device to produce a machine, such that the instructions, which are executed by the processor of the computer or other programmable data processing device, generate an apparatus for implementing functions specified in one or more processes in the flowchart and/or one or more blocks in the block diagram.

These computer program instructions may also be stored in a computer-readable memory that is capable of directing a computer or other programmable data processing device to operate in a specific manner, such that the instructions stored in the computer-readable memory generate an article of manufacture including an instruction apparatus, which implements the functions specified in one or more processes in the flowchart and/or one or more blocks in the block diagram.

These computer program instructions may also be loaded onto a computer or other programmable data processing device to cause a series of operational steps to be performed on the computer or other programmable device to produce a computer-implemented process, such that the instructions which are executed on the computer or other programmable device provide steps for implementing functions specified in one or more processes in the flowchart and/or one or more blocks in the block diagram.

In a typical configuration, a computing device includes one or more processors (CPU), an input/output interface, a network interface, and a memory.

The memory may include non-persistent memory in a computer storage medium, a random access memory (RAM), and/or a non-volatile memory, such as a read-only memory (ROM) or a flash memory (flash RAM). The memory is an example of a computer storage medium.

Computer storage media include permanent and non-permanent, removable and non-removable media, which may implement information storage by any method or technique. The information may be computer-readable instructions, data structures, program modules, or other data. Examples of computer storage media include, but are not limited to, a phase change random access Memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storage, a magnetic cassette tape, a magnetic tape magnetic disk storage or other magnetic storage devices, or any other non-transmission medium, which may be used for storing information accessible by a computing device. As defined in the specification, computer storage media do not include transitory computer-readable media, such as modulated data signals and carrier waves.

It should also be noted that, in this document, the terms "include", "comprise" or any other variants thereof are intended to cover a non-exclusive inclusion, such that a process, method, article or apparatus including a series of elements not only includes those elements, but also includes other elements not explicitly listed, or further includes elements inherent to such process, method, article or apparatus. Without more restrictions, an element defined by the phrase "including a ..." does not exclude that there are additional identical elements in the process, method, article or apparatus including the element.

The above descriptions are merely implementations of the present invention, but the protection scope of the present invention is not limited thereto. Any person skilled in the art can easily conceive of changes or substitutions within the technical scope disclosed by the present invention, which shall fall within the protection scope of the present invention. Therefore, the protection scope of the present invention shall be subject to the protection scope of the claims.

## Claims

1. A gear shifting method, applied to an electronic device of a vehicle, comprising:
acquiring, during a gear shifting of a vehicle through a gear shifting assembly, a rotation parameter of a gear shifting drum in the gear shifting assembly;
determining, based on the rotation parameter of the gear shifting drum, a synchronization state of a synchronizer in the gear shifting assembly corresponding to the rotation parameter; and
controlling, based on the synchronization state of the synchronizer, a gear shifting electric motor to perform the gear shifting.

2. The method according to claim 1, wherein the rotation parameter comprises a rotation angle; and the determining, based on the rotation parameter of the gear shifting drum, the synchronization state of a synchronizer in the gear shifting assembly corresponding to the rotation parameter, comprises:
determining, in a case that a current rotation angle of the gear shifting drum is within a first preset angle range, that the synchronization state of the synchronizer is a first state, the first state comprising a pre-synchronization state;
determining, in a case that the current rotation angle of the gear shifting drum is within a second preset angle range, that the synchronization state of the synchronizer is a second state, the second state comprising a locking state and a lock-release state; and
determining, in a case that the current rotation angle of the gear shifting drum is within a third preset angle range, that the synchronization state of the synchronizer is a third state, the third state comprising a tooth-to-tooth state, a back-taper facing state, and a gear-shifting completion state.

3. The method according to claim 2, wherein an interval critical values of the first preset angle range, an interval critical value of the second preset angle range, and an interval critical value of the third preset angle range each are determined by a preset rotation angle and an angle tolerance of the gear shifting drum.

4. The method according to any one of claims 1 to 3, wherein the controlling, based on the synchronization state of the synchronizer in the gear shifting assembly, the gear shifting electric motor to perform the gear shifting, comprises:
determining, based on the synchronization state of the synchronizer in the gear shifting assembly, a rotating operation performed by the gear shifting electric motor corresponding to the synchronization state of the synchronizer;
controlling, based on the rotating operation, the gear shifting electric motor to rotate; and
completing, based on a rotation of the gear shifting electric motor, the gear shifting.

5. The method according to claim 4, wherein the determining, based on the synchronization state of the synchronizer in the gear shifting assembly, the rotating operation performed by the gear shifting electric motor corresponding to the synchronization state of the synchronizer, comprises:
determining, based on the synchronization state of the synchronizer and a preset mapping relationship between the synchronization state and the rotating operation, the rotating operation performed by the gear shifting electric motor corresponding to the synchronization state of the synchronizer.

6. The method according to claim 4, wherein the controlling, based on the rotating operation, the gear shifting electric motor to rotate, comprises:
controlling, in a condition that the rotating operation is a rotation by a first preset distance, the gear shifting electric motor to rotate by the first preset distance;
controlling, in a condition that the rotating operation is a rotation with a constant torque, the gear shifting electric motor to rotate at the constant torque; and
controlling, in a condition that the rotating operation is a rotation by a second preset distance, the gear shifting electric motor to rotate by the second preset distance.

7. The method according to any one of claims 1 to 3, wherein the acquiring the rotation parameter of the gear shifting drum in the gear shifting assembly, comprises:
determining, based on a position sensor of the gear shifting electric motor, a rotation angle of the gear shifting electric motor; and
determining, based on the rotation angle of the gear shifting electric motor and a transmission ratio between the gear shifting electric motor and the gear shifting drum, the rotation angle of the gear shifting drum.

8. A gear shifting apparatus, comprising:
an acquisition module, configured for acquiring, during a gear shifting of a vehicle through a gear shifting assembly, a rotation parameter of a gear shifting drum in the gear shifting assembly;
a determination module, configured for determining, based on the rotation parameter of the gear shifting drum, a synchronization state of a synchronizer in the gear shifting assembly corresponding to the rotation parameter; and
a control module, configured for controlling, based on the synchronization state of the synchronizer, a gear shifting electric motor to perform the gear shifting.

9. A vehicle, comprising at least:
a processor; and
a memory for storing instructions executable by the processor,
wherein the processor is configured to execute the gear shifting method according to any one of claims 1 to 7.

10. A non-transitory computer-readable storage medium storing a computer program or instructions, wherein the computer program or the instructions in the storage medium, upon executed by a processor, implement(s) steps of the method according to any one of claims 1 to 7.

11. A computer program product, comprising a computer program or instructions, wherein the computer program or instructions, upon executed by a processor, implement(s) steps of the method according to any one of claims 1 to 7.
